## Europäisches Patentamt
## European Patent Office
## Office européen des brevets

(19)

(11) Publication number: **0 321 244**
**A2**

# (12) EUROPEAN PATENT APPLICATION

(21) Application number: **88311878.8**

(22) Date of filing: **15.12.88**

(51) Int. Cl.⁴: **H 04 M 1/27**

(30) Priority: **15.12.87 JP 316481/87**

(43) Date of publication of application:
**21.06.89 Bulletin 89/25**

(84) Designated Contracting States: **DE FR GB IT**

(71) Applicant: **SEIKO INSTRUMENTS INC.**
**31-1, Kameido 6-chome Koto-ku**
**Tokyo 136 (JP)**

(72) Inventor: **Hishiki, Yuji**
**c/o Seiko Instruments Inc. 31-1 Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) **Semi-conductor integrated circuit for a telephone.**

(57) A semi-conductor integrated circuit for a telephone comprises a keyboard interface circuit (1), a memory circuit (2), a control circuit (3), a wait pause detecting circuit (5), a signal output circuit (4) connected to the memory circuit and to the control circuit, and a status output circuit (6) connected to the control circuit. All the circuits are connected to each other through a plurality of signal lines (A).

*F I G. 1*

**Description**

**SEMI-CONDUCTOR INTEGRATED CIRCUIT FOR A TELEPHONE**

This invention relates to semi-conductor integrated circuits (hereinafter referred to as dialler ICs) for use with telephones, and in particular for use with push button telephones.

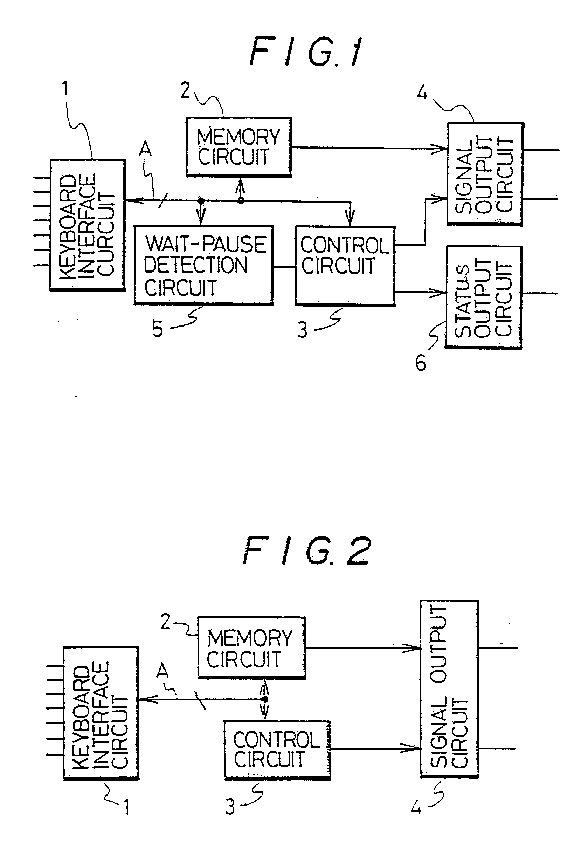

As illustrated in Figure 2, a prior art dialler IC has a keyboard interface circuit 1, a memory circuit 2, a control circuit 3 and a signal output circuit 4, these circuits being connected by a plurality of signal lines A. This prior art dialler IC does not include a wait pause detecting circuit and a status output circuit. The access pause is based on only the time taken for connection from an extension line to an exchange line.

JP-A-546,322 (Japanese Registered Patent No. 976,312) proposes that a wait button is provided to store an access pause in a memory by depressing a weight button followed by the depression of a 0 button. When performing access to, for example, a password number service in a bank by employing the conventional dialler IC, the time required for obtaining a password number receivable state when the line has been connected is different from an ordinary access pause. Therefore, where the password number service is accessed by using an abbreviated number, there is the problem that the respective sets of numbers are independently employed as abbreviated numbers. Alternatively, only one number is used as an abbreviated number, while the other must be dialled by ordinary manual operation.

According to the present invention there is provided a semi-conductor integrated circuit for a telephone comprising: a keyboard interface circuit; a memory circuit and a control circuit, characterised by a wait pause detecting circuit; a signal output circuit connected to said memory circuit and to said control circuit; and a status output circuit connected to said control circuit, all these circuits being connected to each other through a plurality of signal lines.

The present invention therefore provides a dialler IC which includes a wait pause detecting circuit, a control circuit for determining a given state in which a specific key code is detected, thereby coming into a wait pause state and a status output circuit for outputting the factor being in the wait pause state.

Accordingly, the present invention aims at performing a series of operations by only one abbreviated dialling process. This involves the steps of inter-posing a wait pause in a plurality of combinations and numbers and outputting an indication of the wait pause state to the outside.

In the present invention, a button for operations other than the wait pause, can be used as the wait pause button and therefore a wait pause button does not have to be specially provided. For example, a button, (e.g. a T-button) for changing a pulse signal into a DTMF signal can be used.

The invention is illustrated, merely by way of example, in the accompanying drawings, in which:-

Figure 1 is a block diagram illustrating a semi-conductor integrated circuit (dialler IC) according to the present invention for a telephone;

Figure 2 is a block diagram depicting a conventional dialler IC; and

Figure 3 illustrates an arrangement of buttons of a telephone with a dialler IC according to the present invention.

Throughout the drawings like parts have been designated by the same references numerals.

Referring first to Figure 1, there is shown a dialler IC according to the present invention and having a keyboard interface circuit 1 connected via a plurality of signal lines A to a memory circuit 2, a control circuit 3 and a wait pause detecting circuit 5. Typically, data is transmitted and received between the individual circuits through the signal lines A. A status output circuit 6 is connected to the control circuit 3. Immediately after the wait pause detecting circuit 5 has detected a wait pause, the control circuit 3 activates the status output circuit 6 to output a wait pause state. A specific key code (e.g. a key code for a T-button or key which changes a pulse signal into a DTMF signal), or the specific code in a given state (e.g. a state in which an M1 key is depressed) is allocated to the wait pause detected by the wait pause detecting circuit 5. When detecting the wait pause, the system is brought into the wait pause state by means of the control circuit 3. In this wait pause state, operation of a wait pause releasing key alone is permissible, and it is therefore convenient to indicate this state to the outside. For this reason, the status output circuit 6 is rendered operative, and the wait pause state is indicated by lighting up, for example, an LED.

In the above described embodiment, the wait pause detecting circuit 5 may be composed of a simple logic circuit. The control circuit 3 may also involve the use of a relatively easy to use logic circuit to obtain the wait pause state. In connection with the status output circuit 6 also, if a DTMF (a standard signal of push button telephones) and a mode output terminal for pulses are provided, the use for a double purpose can be attained.

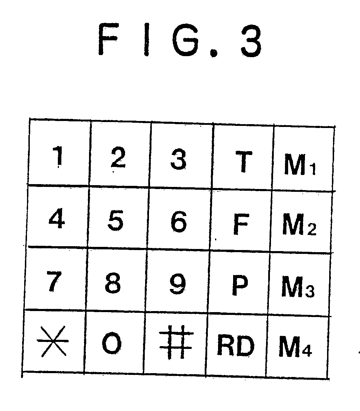

Reference will now be made to Figure 3. When performing access from a PBX (private branch exchange) to an outside password number service by using the thus constructed dialler IC, the exchange line originating number (usually 0), an access pause (e.g. P-button), a destination number, a wait pause (e.g. T-button) and a password number are sequentially registered in a memory (e.g. M1 button) by operating the corresponding buttons. Upon read out from the memory by pushing the M1 button, exchange line sending is at first effected, and the destination number is sent after a pause. The operation ceases after coming into the wait pause state. Subsequent to confirmation of connection to the destination, the wait pause is released by pushing the M1 button again, thereby sending the password number. The sending process is thus completed. Only one wait pause is provided in the above example. However, it is also possible to provide a plurality of wait pauses for sending a plurality of data.

As discussed above, the present invention actualises the dialler IC adapted to services having a wide variety of access pauses by adding simple logic circuits, and also exhibits effects of simplifying the operation and providing efficient utilisation of memory.

**Claims**

1. A semi-conductor integrated circuit for a telephone comprising: a keyboard interface circuit (1); a memory circuit (2) and a control circuit (3), characterised by a wait pause detecting circuit (5); a signal output circuit (4) connected to said memory circuit and to said control circuit; and a status output circuit (6) connected to said control circuit, all these circuits being connected to each other through a plurality of signal lines (A).

2. A semi-conductor integrated circuit as claimed in claim 1 in which the wait pause detecting circuit, in operation, provides a plurality of wait pauses.

# F I G.1

# F I G.2

# F I G. 3

| 1 | 2 | 3 | T | M₁ |
|---|---|---|---|---|
| 4 | 5 | 6 | F | M₂ |
| 7 | 8 | 9 | P | M₃ |
| ✳ | O | # | RD | M₄ |